# EUROPEAN PATENT SPECIFICATION

(11) **EP 0 515 570 B1**
(45) Date of publication and mention of the grant of the patent: **19.01.1994**
(21) Application number: 91905995.6
(22) Date of filing: 21.02.1991
(51) Int. Cl.: C02F 3/12, C02F 3/24, C02F 3/06

(54) **DEVICE FOR AEROBIC PURIFICATION OF WASTE WATER**
VORRICHTUNG ZUR AEROBEN REINIGUNG VON ABWASSER
APPAREIL POUR LA PURIFICATION AEROBIE D'EAUX USEES

(30) Priority: 22.02.1990 NL 9000432
(43) Date of publication of application: 02.12.1992
(73) Proprietor: ZAAL, Theodorus Simon, NL-5051 BE Goirle (NL)
(72) Inventor: ZAAL, Theodorus Simon, NL-5051 BE Goirle (NL)
(74) Representative: Eveleens Maarse, Pieter
(86) International application number: NL9100030
(87) International publication number: WO9113033

(56) References cited:
- FR-A- 397 023
- NL-A- 8 602 135
- NL-C- 18 659
- US-A- 4 042 510

## Description

The present invention relates to a device for aerobic cleaning of waste water comprising at least one vessel equipped for aerobic cleaning.

Such a device is known from the Netherlands patent application 8602135.

In this known patent application the vessel suitable for aerobic cleaning is formed by a channel extending around the centre wherein the water for cleaning is subjected to a movement flowing around the centre.

Despite this movement, the waste water is only brought in small measure into contact with air.

The object of the present invention is therefore to provide such a device for aerobic cleaning wherein the contact between waste water for cleaning and air is much more intensive.

This object is achieved by a series of vessels connected in cascade and opened at their top.

Because the device comprises such a series of vessels connected in cascade, wherein the liquid for cleaning flows from the one vessel to the other, the contact between waste water for cleaning and air is intensified; the contact area between air and water is herein formed not only by the liquid surface in the vessels but also by the surface of the liquid flow from the one vessel to the following vessel.

Devices for aerobic cleaning are otherwise known wherein the waste water for cleaning is sprayed above a vessel. The dimensions of such installations are in general exceptionally large so that they are not suitable for comparatively small-scale devices as in the present invention.

According to a preferred embodiment, a spray device is arranged in a position preceding the first vessel.

The contact between waste water for cleaning and air is herewith improved still further.

The invention will be elucidated hereinafter with reference to the annexed drawing, in which:

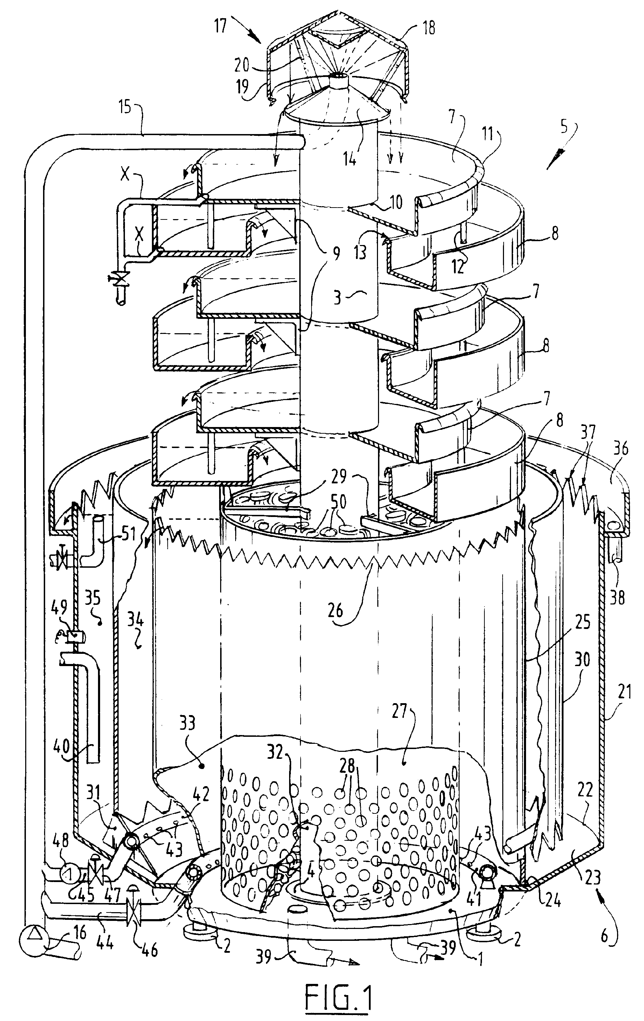

fig. 1 shows a schematic, partly broken away perspective view of a device according to the present invention; and
fig. 2 is a sectional view of a series of vessels connected in cascade according to a second embodiment of the invention.

The device according to the present invention is formed by a base plate 1 which rests on a ground by means of feet 2. The device can be set precisely horizontal by means of the feet 2. This is of great importance for the operation of the device since, if its position is not precisely horizontal, liquid flows to one side and only a small part of the device is effective.

A pillar 3 is fixed in the middle of the round base plate 1 by means of a flange 4. In the present embodiment the mentioned components are manufactured from metal. It is also possible to use plastic.

Arranged around the top portion of pillar 3 is the device for aerobic cleaning, while around the bottom portion of the pillar is arranged a settling tank 6.

The device 5 for aerobic cleaning is formed by a series of vessels 7, 8 connected in cascade and arranged concentrically relative to the pillar 3. Welded to the pillar 3 are three angle supports 9. A threaded rod is fastened in a hole arranged in each of the angle supports. The relevant vessel 7 rests on the upper part of the threaded rods so that the vessel 7 can be set precisely horizontally.

On its outside the vessel 7 is provided with an overflow edge 11. Arranged under each vessel 7 is an annular vessel 8 which is connected by means of spacers 12 to the round vessel 7 arranged thereabove. Each of the annular vessels 8 is provided with an overflow edge 13 on its inside.

Arranged in the side wall at the bottom of both upper vessels 7 and 8 is a discharge pipe x which debouches into a common discharge pipe, in which a stop valve is arranged so that contamination or blockage occurring in the top vessels can be sprayed loose using a hose and can be discharged via the discharge pipes.

Arranged at the top of pillar 3 is a conical cover 14 provided at its top with an opening through which extends a feed pipe 15. The feed pipe 15 is connected to a pump 16. Arranged above the conical cover 14 is a cap 17 provided with a conical part 18 and a cylindrical part 19. The conical cap 17 rests on the conical cover 14 by means of slopingly extending supports 20.

The settling tank 6 is formed by an exterior tank wall 21 which joins via a weld seam 22 onto a base plate 23 with the form of an annular cone segment. The base plate 23 is joined with a weld seam to the actual base plate 1. At the location of the weld seam a cylindrical partition wall 25 extends upwards from the base plate 1. At the top the partition wall 25 is provided with a zigzag edge 26.

Arranged between the pillar 3 and the cylindrical partition wall 25 is an interior partition wall 27 which is provided on its bottom part with openings 28. At its top this interior partition wall is joined to the pillar 3 using supports 29.

An external partition wall 30 further extends between the cylindrical partition wall 25 and the outer wall 21. This rests at its bottom on triangular supports 31 welded onto the sloping base plate 23. This results in a passage through beneath the external partition wall 30.

The above described settling tank 6 comprises four communicating chambers, namely a first chamber 32 situated between the pillar 3 and the internal partition wall 27; a second chamber 33 situated between the internal partition wall 27 and the cylindrical partition wall 25; a third chamber 34 situated between the cylindrical partition wall 25 and the external partition wall 30 and, finally, the fourth chamber 35 situated between the external partition wall 30 and the external tank wall 21. The third chamber and the fourth chamber can also be considered a single space, wherein the external partition wall functions as baffle.

These chambers are otherwise filled with plastic rings 50 which enlarges the surface area onto which microbiological organisms can adhere. It is also possible to employ other filling material having the desired ratio between surface area and volume, for instance in the order of 200 m²/m³, like the vessels 7 and 8.

On the outside of the exterior tank wall 21 is arranged an overflow channel 36, while the upper part of the exterior tank wall 21 is provided with a zigzag wall 37. It is likewise possible to use a curled overflow edge as in the case of the vessels 7 and 8. Connected to the overflow channel 36 is a discharge pipe 38.

Two discharge pipes 39 are connected to the underside of the base plate. A discharge pipe 40 is further connected to the fourth chamber 35. This discharge pipe 40 extends to a relatively short distance from the base plate 23.

Extending at the bottom into the second chamber 33 and the third chamber 34 are round pipes 41 and 42 respectively. Both pipes are provided with openings 43. Connected to both pipes is a discharge pipe 44 extending to the outside, while in both discharge pipes 44, 45 is arranged a stop valve 46, 47 respectively. Finally, a pump 48 is arranged in the discharge pipe 45. The outer wall 21 is otherwise provided with a sludge level detector 49 embodied as a turbidimeter.

Arranged in the outer wall 21 is a discharge pipe 51 which extends into chamber 35 to a short distance below liquid level. This discharge pipe also leads from the septic tank.

The operation of the device according to the present invention will subsequently be described.

Waste water for cleaning coming from a buffer means such as a septic tank is supplied via feed pipe 15 by means of a pump 16. This water sprays out of the opening in the pipe 15 and then strikes against the cap 17 where it is divided into drops and falls downward so that it drips into the uppermost round vessel 7. Aerobic cleaning takes place during this dripping.

Instead of the embodiment shown, wherein the cap 17 is fixed, it can be useful for calculation of the optimum control to give the cap 17 an adjustable form, for instance by means of bent threaded rods replacing the supports 20.

When the liquid in the upper vessel 7 has reached the level of the overflow edge 11 it flows over the overflow edge 11, again in drop form, so that it falls into the following annular vessel 8 and again, when it reaches the level of the overflow edge, flows over the overflow edge 13. This process continues until the bottom annular vessel 8 is reached, wherein aerobic cleaning takes place the whole time due to intimate contact between water and air. The water for cleaning flowing over the overflow edge 13 of the bottom vessel 7 falls into the first chamber 32 of the settling tank 6.

When carrying out their cleaning work the micro-organisms present on the plastic rings 50 in the first chamber 32 form a sludge which collects at the bottom of the first chamber 32. The remaining water, by now for the most part cleaned, passes through the openings 28 in wall 27 and enters the second chamber 27. There it will rise to the level of the overflow edge 26 and flow thereover so that it enters the third chamber. Via the space under the partition 30 the water finally enters the fourth chamber 35. The still remaining heavy material will here also collect at the bottom of the third and fourth chambers. The water, now to a large degree clean, passes over the overflow edge 37 and falls into the overflow channel 36. The cleaned water is carried away therefrom via a discharge pipe 38.

A part of the water situated in the second and in the bottom of the third chamber is drawn via the openings 43 into the annular pipes 41 and 42 respectively and fed via the respective discharge pipes 44 and 45 to the feed channel 15 so that this water is subjected once again to the same treatment. It is possible to interrupt this process by actuating the respective stop valves 46 and 47.

The material located at the bottom of the first chamber 32 is carried away via discharge pipes 39. The same applies for the sludge collected in the bottom of the fourth chamber. This is carried away via discharge pipe 40. In order to prevent the sludge level rising too high in the fourth chamber the sludge level detector 49 is arranged which, when the sludge reaches the relevant level, starts the process of discharging the sludge via the discharge pipe 40 of the septic tank.

When a floating sludge layer forms in the outer chamber 35 this can easily be discharged periodically via the discharge pipe 51 by opening the stop valve arranged in this pipe.

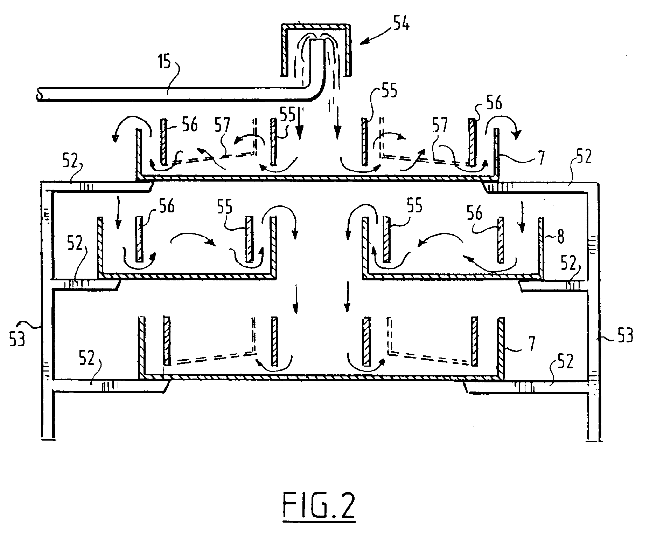

In the embodiment shown in fig. 2 the vessels 7, 8 take not a round but a square form. The pillar 3 is omitted here. The vessels 7, 8 are each connected via supports 52 to four posts 53, only two of which are shown in fig. 2. These supports 52 are welded to the associated vessels 7, 8, although they can also be connected to the vessels 7 and 8 by means of a screw adjustment connection not shown in the drawing. Such a screw adjustment connection permits accurate horizontal setting of the vessels 7, 8. The fact that four separate posts are arranged also contributes to the ease with which the vessels 7, 8 can be set precisely horizontal. In addition, the conical cap 17 is replaced with a rectangular cap 54. A set of baffles 55, 56 is further arranged in each of the vessels 7, 8. These baffles ensure that the circulation in the vessels 7, 8 is improved so that anaerobic situations are avoided. The forming of short-circuit circulation flows is also prevented. The baffles 55, 56 are otherwise fixed to the bottom of the relevant vessels 7, 8 via legs not shown in the drawing. A perforated plate 57 is also arranged in each of the vessels 7. This perforated plate also rests on the bottom of the relevant vessel 7 via legs not shown in the drawing. These perforated plates also improve the circulation; they are therefore only arranged in the vessels 7, in which flow takes place from inside to outside, thus deceleratingly. It is noted here that it is in such a situation that there is the greatest danger of a less good circulation occurring; in the vessels 8 the flow direction is from outside to inside, wherein the water flow is accelerated.

Although the use of such baffles and perforated plates is shown in the present embodiment of rectangular vessels 7, 8, it is also applicable with round vessels 7, 8. Although a round settling tank is discussed in the described embodiment, it is possible to use a settling tank with another form, for instance a rectangular or square settling tank.

Thus obtained is a very compact cleaning device which can be placed easily in a space of limited dimensions, and wherein a good aerobic cleaning takes place.

In addition, because waste water for cleaning remains for a long period in the settling tank, denitrification thereof is furthered. This long period is achieved due to the large dimension of the settling tank.

It is also possible to perform de-phosphating by arranging a dosing pump for aluminium chloride or iron chloride. This results in precipitation of aluminium phosphate and iron phosphate which can be carried away together with the sediment via the discharge pipe 39 to the septic tank.

It is possible to provide the device with an UV-lamp with which bacteria in the effluent can be killed.

When denitrification is applied, the oxygen content in the effluent is low. To bring this oxygen content back up to level, a cascade (not shown in the drawing) can be arranged behind the discharge pipe 38, this cascade being otherwise easy to build on against the outer wall.

To prevent the ambient temperature of the bacteria falling too much during the winter period the device according to the invention can be provided with a heating element.

## Claims

1. Device for aerobic cleaning of waste water comprising at least one vessel equipped for aerobic cleaning, **characterized by** a series of vessels connected in cascade and opened at the top, wherein the vessels are each substantially concentric to each other, and the vessels have a form such that the overflow edge of a vessel is situated straight above the vessel located beneath said vessel.

2. Device as claimed in claim 1, **characterized in that** the vessels have alternately a large and a small size, wherein the overflow edge is situated on the outside of the small vessels and on the inside of the large vessels.

3. Device as claimed in claim 1, **characterized in that** the vessels are round or annular.

4. Device as claimed in claim 2 or 3, **characterized in that** the large vessels are each attached to the vessel located directly thereabove and that the vessels are fixed to a pillar arranged concentrically relative to the vessels.

5. Device as claimed in claim 1 or 2, **characterized in that** the vessels are rectangular.

6. Device as claimed in claim 3 or 5, **characterized in that** the vessels are each fixed to posts extending outside the vessels.

7. Device as claimed in any of the claims, **characterized in that** baffles are arranged in the vessels.

8. Device as claimed in claim 7, **characterized in that** two substantially parallel baffles are arranged in each of the vessels and that a perforated plate is fixed between the baffles, wherein the distance between the bottom of the vessel in which the perforated plate is fixed and the plate decreases in the flow direction.

9. Device as claimed in any of the foregoing claims, **characterized in that** a settling tank is arranged beneath the vessels connected in cascade.

10. Device as claimed in claim 9, **characterized in that** the settling tank is concentric relative to a central pillar and that the settling tank is divided by circular, concentric partitions.

11. Device as claimed in claim 10, **characterized in that** the partitions are provided alternatingly in radial direction with a passage arranged on the underside of the partitions.

12. Device as claimed in claim 11, **characterized in that** the passage is formed because the partition does not extend as far as the bottom of the settling tank, or because the passage is formed by holes arranged in the partition.

13. Device as claimed in claim 10, 11 or 12, **characterized in that** at the location of the passage a channel is arranged extending around and provided with openings.

14. Device as claimed in any of the claims 8-12, **characterized in that** the settling tank is filled with loose material, whereof the ratio between surface area and volume is large.

## Patentansprüche

1. Vorrichtung zur aeroben Reinigung von Abwasser mit mindestens einem für aerobe Reinigung ausgerüsteten Behälter, **gekennzeichnet** durch eine Serie von in Kaskade geschalteten und oben offenen Behältern, wobei die Behalter jeweils im wesentlichen konzentrisch zueinander sind und eine solche Form haben, daß sich die Überlaufkante eines Behälters gerade über dem unterhalb dieses Behälters angeordneten Behälter befindet.

2. Vorrichtung nach Anspruch 1,
dadurch **gekennzeichnet,** daß die Behälter abwechselnd eine große und eine kleine Größe haben, wobei die Überlaufkante an der Außenseite der kleinen Behälter und an der Innenseite der großen Behälter angeordnet ist.

3. Vorrichtung nach Anspruch 1,
dadurch **gekennzeichnet**, daß die Behälter rund oder ringförmig sind.

4. Vorrichtung nach Anspruch 2 oder 3,
dadurch **gekennzeichnet,** daß die großen Behälter jeweils an dem direkt darüber befindlichen Behälter befestigt sind und daß die Behälter an einer konzentrisch zu den Behältern angeordneten Säule befestigt sind.

5. Vorrichtung nach Anspruch 1 oder 2,
dadurch **gekennzeichnet,** daß die Behälter rechteckig sind.

6. Vorrichtung nach Anspruch 3 oder 5,
dadurch **gekennzeichnet**, daß die Behälter jeweils an Stützen befestigt sind, die außerhalb der Behälter verlaufen.

7. Vorrichtung nach einem der Ansprüche,
dadurch **gekennzeichnet**, daß in den Behältern Blenden angeordnet sind.

8. Vorrichtung nach Anspruch 7,
dadurch **gekennzeichnet,** daß zwei im wesentlichen parallele Blenden in jedem der Behälter angeordnet sind und daß zwischen den Blenden eine perforierte Platte befestigt ist, wobei der Abstand zwischen dem Boden des Behälters, in dem die perforierte Platte befestigt ist, und der Platte in Strömungsrichtung abnimmt.

9. Vorrichtung nach einem der vorangehenden Ansprüche,
dadurch **gekennzeichnet**, daß ein Absetztank unter den in Kaskade geschalteten Behältern angeordnet ist.

10. Vorrichtung nach Anspruch 9,
dadurch **gekennzeichnet,** daß der Absetztank konzentrisch zu einer Mittelsäule ist und daß der Absetztank durch kreisförmige konzentrische Trennwände unterteilt ist.

11. Vorrichtung nach Anspruch 10,
dadurch **gekennzeichnet,** daß die Trennwände abwechselnd in Radialrichtung mit einem an der Unterseite der Trennwände angeordneten Durchlaß versehen sind.

12. Vorrichtung nach Anspruch 11,
dadurch **gekennzeichnet,** daß der Durchlaß dadurch gebildet ist, daß sich die Trennwand nicht bis zum Boden des Absetztanks erstreckt, oder dadurch, daß der Durchlaß von in der Trennwand angeordneten Löchern gebildet ist.

13. Vorrichtung nach Anspruch 10, 11 oder 12,
dadurch **gekennzeichnet,** daß im Bereich des Durchlasses ein Kanal vorgesehen ist, der sich rundum erstreckt und mit Öffnungen versehen ist.

14. Vorrichtung nach einem der Ansprüche 8 bis 12,
dadurch **gekennzeichnet,** daß der Absetztank mit Schüttmaterial gefüllt ist, dessen Verhältnis zwischen Oberfläche und Volumen groß ist.

## Revendications

1. Dispositif de nettoyage aérobie d'eau usée comportant au moins un réservoir équipé pour un nettoyage aérobie, caractérisé par une série de réservoirs reliés en cascade et ouverts au niveau de la partie supérieure, dans lequel les réservoirs sont chacun à peu près concentriques l'un à l'autre, et les réservoirs ont une forme telle que le bord de débordement d'un réservoir est situé directement au-dessus du réservoir situé en-dessous dudit réservoir.

2. Dispositif selon la revendication 1, caractérisé en ce que les réservoirs ont de manière alternée une dimension importante et une dimension petite, dans lequel le bord de débordement est situé sur le côté extérieur des petits réservoirs et sur le côté intérieur des grands réservoirs.

3. Dispositif selon la revendication 1, caractérisé en ce que les réservoirs sont ronds ou annulaires.

4. Dispositif selon la revendication 2 ou 3, caractérisé en ce que les grands réservoirs sont chacun fixés au réservoir situé directement au-dessus et en ce que les réservoirs sont fixés sur un poteau agencé concentriquement par rapport aux réservoirs.

5. Dispositif selon la revendication 1 ou 2, caractérisé en ce que les réservoirs sont rectangulaires.

6. Dispositif selon la revendication 3 ou 5, caractérisé en ce que les réservoirs sont chacun fixés à des poteaux s'étendant à l'extérieur des réservoirs.

7. Dispositif selon l'une quelconque des revendications précédentes, caractérisé en ce que des déflecteurs sont agencés dans les réservoirs.

8. Dispositif selon la revendication 7 caractérisé en ce que deux déflecteurs à peu près parallèles sont agencés dans chacun des réservoirs et en ce qu'une plaque perforée est fixée entre les déflecteurs, dans lequel le distance entre le fond du réservoir dans lequel la plaque perforée est fixée et la plaque diminue dans la direction d'écoulement.

9. Dispositif selon l'une quelconque des revendications précédentes, caractérisé en ce qu'un réservoir de sédimentation est agencé en-dessous des réservoirs reliés en cascade.

10. Dispositif selon la revendication 9, caractérisé en ce que le réservoir de sédimentation est concentrique par rapport à un pilier central et en ce que le réservoir de sédimentation est divisé par des cloisons circulaires concentriques.

11. Dispositif selon la revendication 10, caractérisé en ce que les cloisons sont agencées de manière alternée en direction radiale, un passage étant agencé sur le côté inférieur des cloisons.

12. Dispositif selon la revendication 11, caractérisé en ce que le passage est formé du fait que la cloison ne s'étend pas jusqu'au fond du réservoir de sédimentation, ou parce que le passage est formé de trous agencés dans la cloison.

13. Dispositif selon la revendication 10, 11 ou 12, caractérisé en ce qu'à l'emplacement du passage, un canal est agencé s'étendant autour et muni d'ouvertures.

14. Dispositif selon l'une quelconque des revendications 8 à 12, caractérisé en ce que le réservoir de sédimentation est rempli avec de la matière lâche, dont le rapport entre la surface superficielle et le volume est important.
